Europäisches Patentamt

European Patent Office

Office européen des brevets

(11) Numéro de publication: **0 345 238**
**A1**

## (12) DEMANDE DE BREVET EUROPEEN

(21) Numéro de dépôt: **89870070.3**

(22) Date de dépôt: **23.05.89**

(51) Int. Cl.⁴: **A 01 G 9/14**
**E 04 D 3/06**

(30) Priorité: **25.05.88 BE 8800577**

(43) Date de publication de la demande:
**06.12.89 Bulletin 89/49**

(84) Etats contractants désignés:
**AT BE DE ES FR GB NL**

(71) Demandeur: **N.V. DECOUTERE SERRENBOUW**
**NAAMLOZE VENNOOTSCHAP**
**Manestraat 35**
**B-8701 Izegem (BE)**

(72) Inventeur: **Decoutere, Willem**
**Manestraat 35**
**B-8701 Izegem (BE)**

(74) Mandataire: **Donné, Eddy**
**Bureau M.F.J. Bockstael nv Arenbergstraat 13**
**B-2000 Antwerpen (BE)**

(54) **Construction de toiture pour serres et éléments d'accouplement utilisés à cet effet.**

(57) Construction de toiture pour serres qui consiste principalement en des profilés de support (1) qui sont emprisonnés entre des gouttières (2) et un faîte (3), les gouttières possédant des bords cintrés (4) ou similaires, caractérisée en ce que les connexions entre les profilés de support (1) et une gouttière (2) sont principalement formées par au moins un élément d'accouplement (8) muni de moyens de fixation (9) permettant à cet élément d'accouplement (8) d'être glissé par-dessus le bord (4) de la gouttière (2), ces moyens de fixation (9) formant, après l'installation des profilés de support (1), en même temps un verrouillage empêchant à l'élément d'accouplement (8) et la gouttière (2) d'être détachés par glissement après le montage de la construction de toiture.

Fig. 2

EP 0 345 238 A1

Description

## Construction de toiture pour serres et éléments d'accouplement utilisés à cet effet.

La présente invention concerne la construction d'une toiture pour serres, ainsi que des éléments d'accouplement utilisés à cet effet.

Des constructions de toitures pour serres sont connues qui consistent principalement de profilés de support, dans la plupart des cas de petits-bois, qui sont placés entre le faîte et deux gouttières. Les profilés de support, les gouttières et le faîte sont glissés l'un dans l'autre ou accrochés l'un dans l'autre, où des pièces d'accouplement complémentaires sont utilisées ou non. Les constructions de ce genre, connues jusqu'à présent, possèdent néanmoins le désavantage que, lorsque des forces importantes latérales ou vers le haut sont appliquées sur le toit des serres, les éléments d'accouplement peuvent être soulevés l'un hors de l'autre avec toutes les conséquences désastreuses qui s'ensuivent.

Il est donc évident que de plus en plus de pays prennent des dispositions légales exigeant que les contructions de toitures de serres doivent être réalisées résistantes à la tempête.

Afin de répondre à cette réglementation, le fait est connu de fixer les différentes pièces des serres l'une à l'autre par l'utilisation de boulons et similaires. Cette technique, par contre, possède le désavantage qu'elle est très onéreuse puisque, d'une part, les différents profilés doivent être équipés de trous nécessaires, et d'autre part, la construction des serres accapare beaucoup de temps puisque le tout doit être boulonné.

Une autre solution consiste en l'utilisation de brides qui, par exemple, relient les petits-bois de deux constructions de toiture placées l'une à côté de l'autre, ainsi que de brides reliant les petits-bois placés de chaque côté du faîte. Cette construction aussi est à l'origine de frais complémentaires, d'une part, puisque des brides spéciales sont nécessaires, et d'autre part, puisque le montage de telles brides prend beaucoup de temps.

La présente invention a pour but une construction de toiture pour serres , éliminant le désavantage susdit.

A cet effet, la présente invention concerne une construction de toiture pour serres qui consiste en des profilés de support étant emprisonnés entre les gouttières et un faîte, caractérisée en ce que les connexions entre les profilés de support et une gouttière sont formées pricipalement d'au moins un élément d'accouplement muni de moyens de fixation permettant à cet élément d'accouplement d'être glissé par dessus le bord de la gouttière, où ces moyens, après l'installation des profilés de support et/ou la surface du toit, forment en même temps un verrouillage qui empêche que l'élément d'accouplement et que la gouttière puissent se découpler après le montage de la construction de toiture.

Suivant la réalisation préférentielle, l'élément d'accouplement susdit consiste en un profilé, tandis que les moyens de fixation susdits consistent en une assiette, installée sur le côté inférieur de ce profilé, qui suit principalement la forme du bord recourbé de la gouttière. De cette façon, cet élément d'accouplement peut simplement être pivoté par-dessus du bord de la gouttière, de telle façon que dès que les profilés de support sont fixés dans l'élément d'accouplement, celui-ci ne peut plus être pivoté et ne peut donc, d'aucune manière, se détacher de la gouttière. Aussi, la fixation des profilés de support, d'une part, au faîte et, d'autre part, à l'élément d'accouplement précité se fait de préférence sans moyens filetés ni par l'entremise d'éléments complémentaires.

La présente invention a également trait à un élément d'accouplement en forme de faîte.

Dans le but de mieux démontrer les caractéristiques suivant l'invention, une réalisation préférentielle est décrite ci-dessous, en tant qu'exemple et sans caractère limitatif, avec référence aux dessins ci-inclus, dans lesquels :

la figure 1 représente schématiquement une serre munie d'une construction de toiture suivant l'invention ;

la figure 2 représente, à plus grande échelle et en coupe, une vue de la partie indiquée par F2 dans la figure 1 ;

la figure 3 représente une connexion entre, d'une part, l'élément d'accouplement suivant l'invention et, d'autre part, un profilé de support ;

la figure 4 représente une vue en coupe suivant la ligne IV-IV dans la figure 2 ;

la figure 5 représente le faîte de la construction de toiture ;

la figure 6 représente une vue en perspective du profilé du faîte.

la figure 7 représente une variante de la partie représentée dans la figure 2 ;

les figures 8 et 9 représentent des vues schématiques, pour une vue suivant la flèche F8 dans la figure 7, où les différentes étapes de montage sont représentées ;

la figure 10 représente une vue en coupe du faîte de la contruction de toiture, ainsi qu'une pièce de fixation anti-tempête ;

la figure 11 représente encore une variante de la partie représentée dans la figure 2.

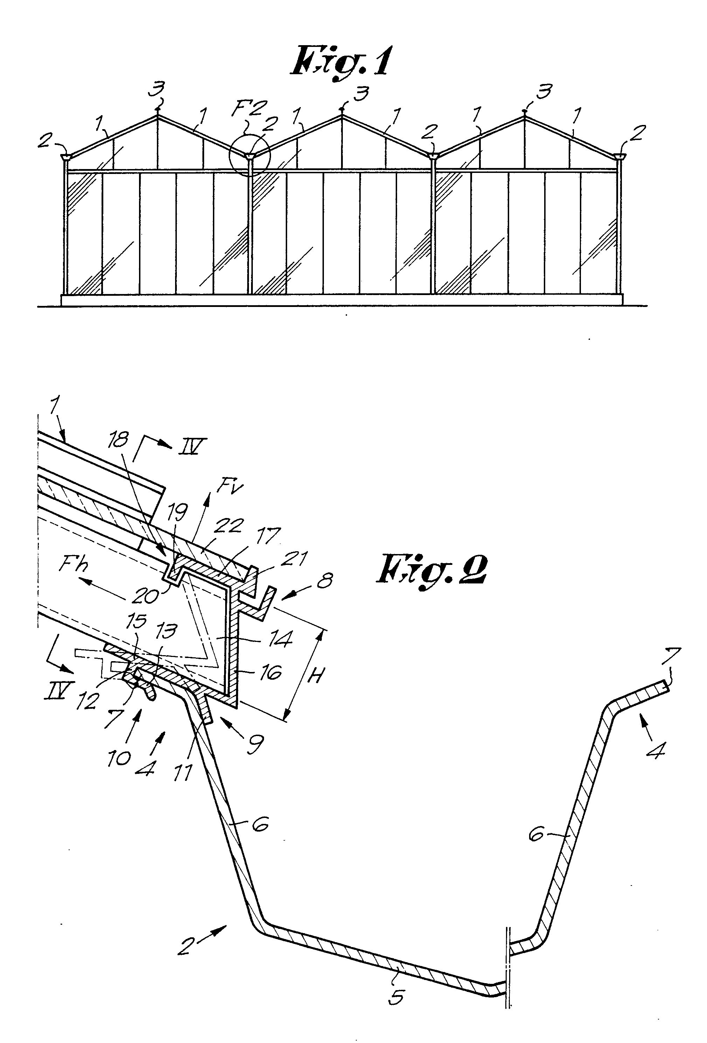

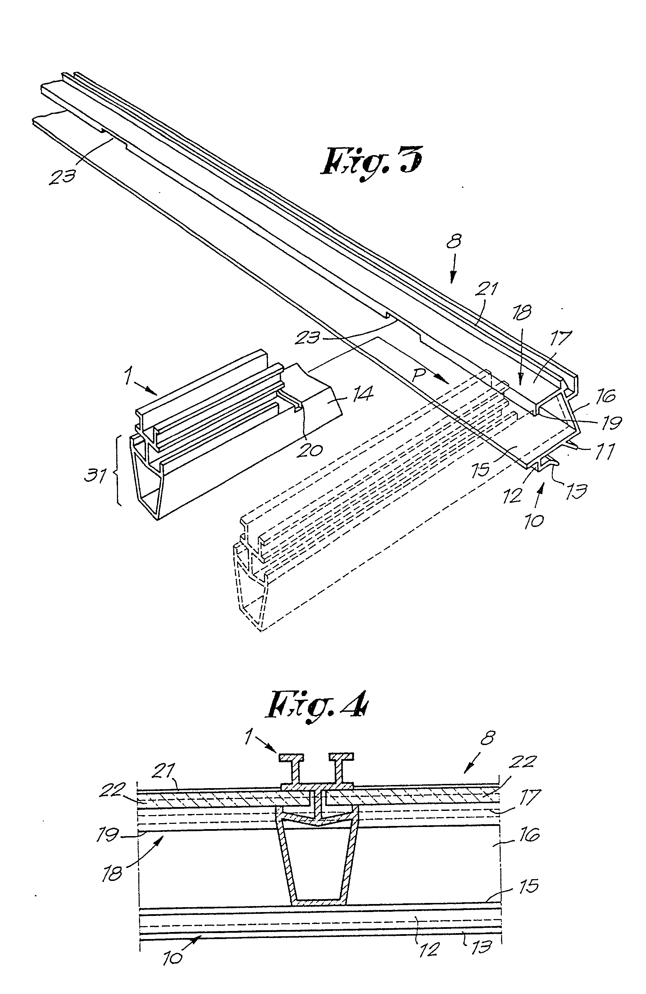

Dans la figure 1 une serre est représentée schématiquement dont les constructions de toiture consistent principalement de profilés de support 1, tels que des petits-bois, étant emprisonnés entre les gouttières 2 et un faîte 3. Tel que représenté dans la figure 2, le point de départ suivant l'invention indique que les gouttières 2 possèdent des bords 4 cintrés ou similaires. Suivant la réalisation représentée, ces gouttières 2 consistent à cet effet de profilés en acier cintrés offrant un fond 5, des parois latérales 6 inclinées, pratiquement verticales, et des bords cintrés 4 dont les extrémités libres 7 accusent la même inclinaison que celle de la toiture.

La particularité de la présente invention réside en ce que, en premier lieu, les connexions entre les profilés de support 1 et une gouttière 2 sont formées principalement par des éléments d'accouplement 8 munis de moyens de fixation 9 qui permettent le glissement, respectivement le mouvement pivotant, de ces éléments d'accouplement 8 par-dessus du bord 4 de la gouttière 2, où ces moyens 9, après l'installation des profilés de support 1, forment en même temps un verrouillage qui empêche les éléments d'accouplement 8 et la gouttière 2, après le montage de la construction de toiture, de se détacher suite à des forces, par exemple des forces horizontales Fh et des forces verticales Fv, auxquelles la toiture de la serre est sujette durant des tempêtes. Les moyens 9 consistent en une assiette qui suit principalement la forme du bord cintré 4 de la gouttière 2, où cette assiette est formée de préférence par, et telle que représentée dans la figure 2, d'une part, une lèvre 10 en forme de crochet, située sur le côté inférieur de l'élément d'accouplement 8 concerné, qui s'emboîte par-dessus l'extrémité libre 7 du bord 4 de la gouttière et, d'autre part, par une saillie 11 sous forme d'une lèvre, placée en oblique par rapport à la lèvre située sur le côté inférieur s'accrochant derrière le bord 4 de la gouttière 2 et étant aussi partiellement adjacente au côté intérieur de la paroi latérale 6 susdite. La lèvre en forme de crochet 10 consiste principalement en une première partie 12 perpendiculaire au côté inférieur de l'élément d'accouplement 8 et une deuxième partie 13 raccordée à celle-ci se trouvant en parallèle au côté inférieur, la distance entre le côté inférieur de l'élément d'accouplement 8 et la deuxième partie précitée étant pratiquement égale à l'épaisseur du bord 4 de la gouttière.

Il est évident que l'élément d'accouplement 8 est, en outre, réalisé de telle façon que les profilés de support ou les petits-bois 1 peuvent être reliés efficacement par leurs extrémités inférieures 14 avec l'élément d'accouplement 8. A cet effet, ce dernier accuse principalement une section en U et consiste donc en, respectivement, un bourrelet inférieur 15, un bourrelet latéral 16 et un bourrelet supérieur 17, l'un et l'autre de manière que la forme en U forme une assiette correcte pour l'extrémité inférieure 14 d'un ou de plusieurs profilés de support 1. En même temps, des moyens de verrouillage 18 sont prévus qui, après l'installation de l'extrémité inférieure 14 dans l'élément d'accouplement 8, empêchent que les profilés de support 1 puissent encore se déloger de l'élément d'accouplement 8. Ces moyens de verrouillage 18 sont formés dans la figure 2 par une lèvre ou collerette 19 dirigée vers l'intérieur par rapport à la forme en U susdite pouvant coopérer avec un évidement 20 dans le profilé de support 1.

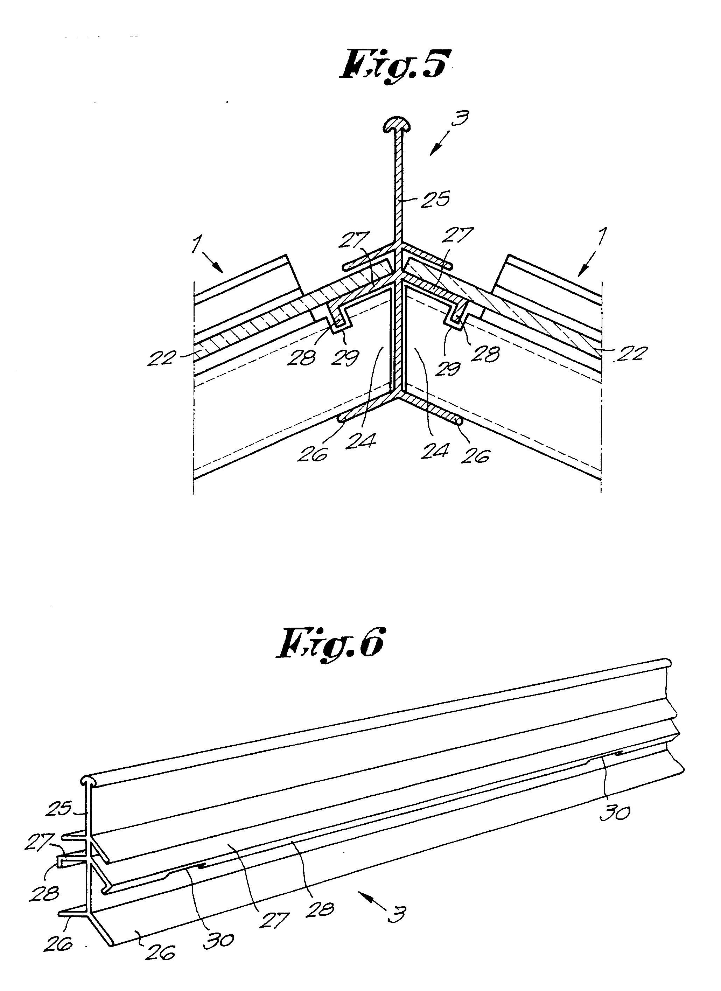

Quoique, suivant l'invention, il ne soit pas exclu qu'un élément d'accouplement individuel est utilisé par extrémité 14 de chaque profilé de support 1, il est préférable que les éléments d'accouplement 8 consistent en des profilés, tels que représentés dans la figure 3, pouvant simplement être glissés par-dessus les extrémités libres 7 de la gouttière 2 et s'étendant en parallèle le long de toute la longueur de la gouttière 2. Ces profilés forment alors aussi le châssis inférieur des lucarnes. Ils sont ainsi équipés d'une collerette 21 dirigée vers le haut formant, tel que représenté dans la figure 2, un support pour la feuille de verre 22.

Tels qu'également représentés dans la figure 3, des évidements 23 sont prévus à des distances bien définies dans la lèvre 19 susdite permettant aux extrémités libres 14 des profilés de support 1 d'être glissées dans l'élément d'accouplement 8, et pouvant ensuite être verrouillées derrière la lèvre 19, par leur mouvement latéral suivant la flèche P. Dès que les feuilles de verre 22 sont installées, le déplacement des profilés de support ou du petit-bois 1 n'est plus possible.

Il est évident que la construction suivant l'invention, telle que représentée dans les figures 2 et 3, permet un montage simple sans que des éléments filetés ou similaires soient nécessaires et que les connexions avec les gouttières 2, du moins lorsque les profilés de support 1 restent connectés au faîte 3, ne puissent en aucun cas se détacher.

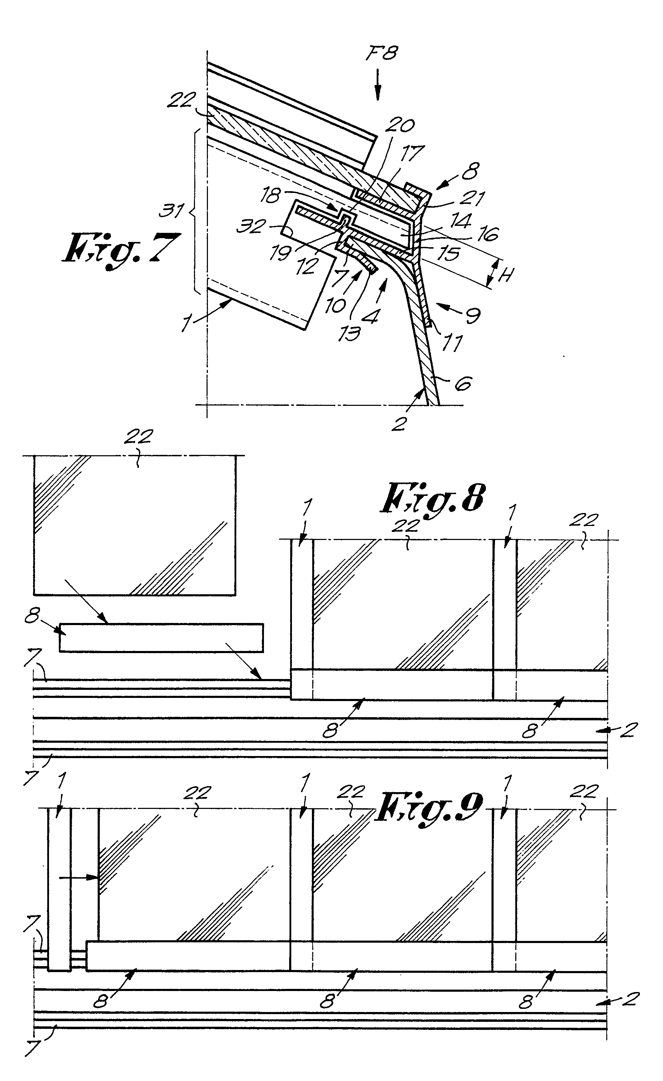

A des fins de clarification, la figure 4 représente encore une vue en coupe de la réalisation préférentielle des profilés de support 1.

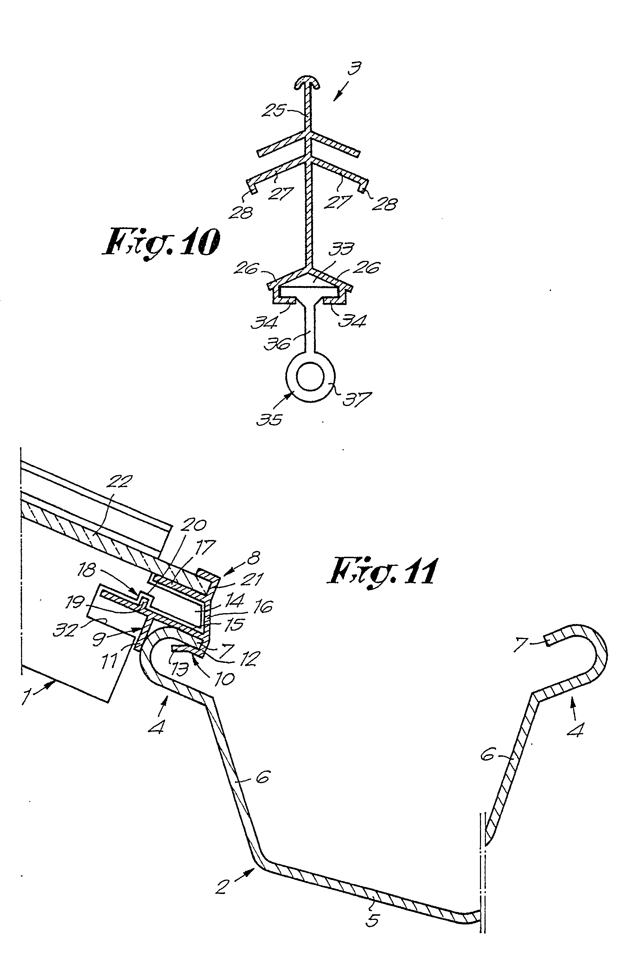

Une construction de toiture particulièrement avantageuse est aussi réalisée suivant l'invention lorsque la connexion des extrémités inférieures 14 des profilés de support 1, telle que représentée dans la figure 2, est combinée avec un faîte 3 tel que représenté dans la figure 5. De cette manière, en effet, une ferme résistant à la tempête est réalisée sans avoir recours à des éléments individuels tels que des brides, des boulons ou similaires.

L'avantage représenté par le faîte 3 suivant la figure 5 consiste en ce qu'il est formé exclusivement par un seul profilé muni de moyens pouvant coopérer avec les extrémités supérieures 24 des profilés de support 1 placées le long des deux côtés du faîte 3. Le faîte 3 consiste à cet effet en un profilé étant principalement formé par une âme 25 et des brides 26 et 27 inclinées vers le bas de chaque côté de cette âme 25 formant une assiette pour les extrémités supérieures 24 des profilés de support 1, de manière analogue à celle des extrémités inférieures 14 suivant la figure 3. Les brides supérieures 27 sont aussi équipées de collerettes 28 pouvant coopérer avec les évidements 29 dans les profilés de support 1.

Telles que représentées dans la figure 6, les lèvres ou collerettes 28 sont également équipées, à des distances bien définies, d'évidements 30 afin de faciliter l'installation des profilés de support 1.

Une variante de l'élément d'accouplement 8 est représentée dans la figure 7, la lèvre 19, contrairement à la réalisation dans la figure 2, étant placée sur le bourrelet inférieur 15, au lieu de sur le bourrelet supérieur 17.

Dans la réalisation des figures 2 à 4, la partie en forme tubulaire 31 du profilé de support 1 s'emboîte de toute sa hauteur dans l'assiette formée par les bourrelets 15, 16 et 17. Ceci n'est néanmoins pas indispensable. Dans la figure 7 une variante est donc aussi représentée démontrant que la hauteur du profilé de support 1, plus particulièrement de la partie en forme tubulaire 31 de celui-ci, ne doit pas nécessairement coïncider avec la hauteur E de l'assiette susdite. Dans ce cas le profilé de support 1 est muni, du côté inférieur près de l'extrémité 14, d'une encoche ou entaille 32. De cette manière, sans tenir compte des dimensions des profilés de support 1, des éléments d'accouplement 8 identiques peuvent être utilisés. Lors de portées plus importantes, des profilés de support 1 plus lourds étant alors utilisés, il s'ensuit qu'il ne faut pas nécessairement utiliser un élément d'accouplement 8 avec un bourrelet latéral 16 plus haut, de sorte que le prix de revient des éléments d'accouplement 8 à utiliser reste relativement limité.

Dans les figures 8 et 9, une variante de la construction de toiture est représentée, des éléments d'accouplement d'une longueur réduite étant utilisés dans ce cas, de préférence d'une longueur correspondant pratiquement à la largeur d'une feuille de verre 22. La construction de toiture pouvant ainsi être assemblée plus aisément en plaçant alternativement, tels que représenté dans les figures 8 et 9, un élément d'accouplement 8 et un profilé de support 1, l'un et l'autre avec une insertion simultanée d'une feuille de verre 22 ou non. L'élément d'accouplement est, dans ce cas, pivoté par-dessus le bord de la gouttière 2, tandis que l'extrémité 14 de chaque profilé de support 1 sera insérée par glissement latéral dans l'élément d'accouplement.

La figure 10 représente une autre réalisation particulière du faîte 3. Dans ce cas, le profilé de faîtage est muni, en dessous, d'une assiette 33, formée de bords 34 dirigés l'un vers l'autre, l'un et l'autre de manière qu'un élément de fixation 35 pour la fixation d'un moyen anti-tempête peut être installé. L'élément de fixation 35 comprend une partie en forme de T 36 s'emboîtant dans l'assiette 33 ayant un oeil 37 en saillie de cette assiette. L'élément de fixation 35 est glissé de façon latérale dans le faîte et placé en position. Un câble ou similaire peut être fixé à l'oeil 37 pouvant être tendu vers un support dans le sol.

Dans la figure 11 une variante est représentée dans le cas où une gouttière est utilisée munie d'un bord 4 courbé à 180°. Les moyens de fixation 9 comprennent dans ce cas, d'une part, une lèvre en forme de crochet 10, placée sur le côté inférieur de l'élément d'accouplement 8, s'emboîtant par-dessus l'extrémité libre 7 du bord 4 de la gouttière 2 et, d'autre part, d'une saillie 11 touchant le bord recourbé 4 le long du côté extérieur de la gouttière 2. Il est évident que, dans ce cas, l'élément d'accouplement 8 est glissé par-dessus le bord 4 à partir du côté intérieur de la gouttière 2.

Tous les profilés mentionnés précédemment, à l'exception de la gouttière 2, sont de préférence réalisés en aluminium.

Il est évident que la présente invention a également trait à l'élément d'accouplement 8 et au faîte 3 étant, dans ce cas, utilisés pour la construction de toiture décrite précédemment, plus particulièrement les profilés tels que représentés dans les figures.

La présente invention n'est en aucun cas limitée à la réalisation décrite en tant qu'exemple et représentée dans les figures, mais une telle construction de toiture pour serre peut être réalisée en d'autres formes et dimensions sans outrepasser le cadre de l'invention.

## Revendications

1.- Construction de toiture pour serres qui consiste principalement en des profilés de support (1) qui sont emprisonnés entre des gouttières (2) et un faîte (3), les gouttières possédant des bords cintrés (4) ou similaires, caractérisée en ce que les connexions entre les profilés de support (1) et une gouttière (2) sont principalement formées par au moins un élément d'accouplement (8) muni de moyens de fixation (9) qui permettent à cet élément d'accouplement (8) d'être glissé par-dessus le bord (4) de la gouttière (2), ces dispositifs de fixation formant, après l'installation des profilés de support (1) et/ou la surface du toit, en même temps un verrouillage empêchant l'élément d'accouplement (8) et la gouttière (2) d'être détachés par glissement après le montage de la construction de toiture.

2.- Construction de toiture suivant la revendication 1, caractérisée en ce que les moyens de fixation (9) susdits consistent en une assiette qui coopère principalement avec la forme cintrée du bord (4) de la gouttière (2).

3.- Construction de toiture suivant la revendication 1 ou 2, caractérisée en ce que les dispositifs de fixation (9) susdits consistent, d'une part, en une lèvre (10) en forme de crochet, située sur le côté inférieur de l'élément d'accouplement (8), qui s'emboîte par-dessus l'extrémité libre (7) du bord (4) de la gouttière (2) concernée et, d'autre part, en une saillie (11) qui s'accroche derrière le bord cintré (4) de la gouttière (2).

4.- Construction de toiture suivant la revendication 3, caractérisée en ce que la susdite saillie (11) repose contre le côté intérieur de la paroi latérale (6) de la gouttière (2).

5.- Construction de toiture suivant l'une des revendications précédentes, caractérisée en ce que l'élément d'accouplement (8) présente une assiette pour les extrémités inférieures (14) des profilés de support (1), et des moyens de verrouillage (19) qui coopèrent avec les profilés de support (1) placés dans l'assiette.

6.- Construction de toiture suivant l'une des revendications précédentes, caractérisée en ce que l'élément d'accouplement (8) consiste en un profilé qui s'étend dans la direction longitudinale de la gouttière (2).

7.- Construction de toiture suivant la revendication 6, caractérisée en ce que les dispositifs de fixation (9) comprennent une lèvre (10) en forme de crochet, se situant sur le côté inférieur du profilé, s'emboîtant par-dessus l'extrémité libre (7) du bord (4) de la gouttière (2) concernée et d'une saillie (11) s'accrochant derrière le bord cintré (4) de la gouttière (2), où tant la lèvre (10) que la saillie (11) font partie du profilé et s'étendent dans la direction longitudinale de celui-ci.

8.- Construction de toiture suivant la revendication 7, caractérisée en ce que la lèvre (10) en forme de crochet consiste principalement en une première partie (12) perpendiculaire au côté inférieur de l'élément d'accouplement (8), et d'une deuxième partie (13) se joignant à la première se situant en parallèle au côté inférieur de l'élément d'accouplement (8), la distance entre le côté inférieur et la deuxième partie (13) susdite étant pratiquement égale à l'épaisseur du bord (4) de la gouttière.

9.- Construction de toiture suivant l'une des revendications 7 ou 8, caractérisée en ce que la saillie (11) susdite consiste en une lèvre s'étendant de façon inclinée par rapport au côté inférieur du profilé.

10.- Construction de toiture suivant l'une des revendications précédentes, caractérisées en ce que l'élément d'accouplement (8) présente principalement une coupe en U formant une assiette pour les extrémités inférieures (14) des profilés de support (1), qui consiste en, respectivement, un bourrelet inférieur (15), un bourrelet latéral (16) et un bourrelet supérieur (17), le bourrelet supérieur (17) possédant une lèvre (19) dirigée vers l'intérieur pouvant coopérer avec des évidements (20) dans les extrémités (14) des profilés de support (1) afin de les verrouiller.

11.- Construction de toiture suivant la revendication 10, caractérisée en ce que la lèvre (19) dirigée vers l'intérieur se situe sur le bourrelet supérieur (17).

12.- Construction de toiture suivant le revendication 11, caractérisée en ce que la lèvre (19) dirigée vers l'intérieur se situe sur le bourrelet inférieur (15).

13.- Construction de toiture suivant la revendication 10, l'élément d'accouplement (8) consistant en un profilé, caractérisée en ce que la lèvre (19) susdite présente des évidements (23) à des distances bien définies permettant aux extrémités (14) des profilés de support (1) d'être glissées dans l'élément d'accouplement (8).

14.- Construction de toiture suivant l'une des revendications 6 à 13, caractérisée en ce qu'elle présente des différents éléments d'accouplement (8) d'une longueur limitée permettant de glisser les profilés de support (1) latéralement dans les éléments d'accouplement (8) lors du montage.

15.- Construction de toiture suivant la revendication 14, caractérisée en ce que les éléments d'accouplement (8) présentent une longueur étant pratiquement similaire à la largeur d'une feuille de verre (22).

16.- Construction de toiture suivant l'une des revendications précédentes, caractérisée en ce que l'élément d'accouplement (8) présente un bord relevé (21) formant un support pour les feuilles de verre (22).

17.- Construction de toiture suivant l'une des revendications précédentes, caractérisée en ce que l'élément d'accouplement (8) est en aluminium.

18.- Construction de toiture suivant l'une des revendications 5 à 17, caractérisée en ce que la hauteur (H) de l'assiette pour le profilé de support (1) est inférieure à la hauteur du corps effectif du profilé de support (1) et que le profilé de support (1) présente une encoche (32) à son extrémité inférieure (14), le corps (32) étant seulement partiellement contenu dans l'assiette.

19.-Construction de toiture suivant l'une des revendications précédentes, caractérisée en ce que la gouttière (2) est formée par un profilé en acier consistant en un fond (5), des parois latérales (6) inclinées presque à la verticale et des extrémités libres qui s'étendent en parallèle à la direction des parties avoisinantes de la toiture.

20.- Construction de toiture suivant l'une des revendications précédentes, caractérisée en ce que le faîte (3) consiste principalement en un profilé présentant de chaque côté des moyens qui forment des assiettes pour les extrémités supérieures (24) des profilés de support (1).

21.- Construction de toiture suivant la revendication 20, caractérisée en ce que le profilé susdit consiste principalement en une âme (25) et, de chaque côté de cette âme (25), des brides (26-27) inclinées vers le bas, la bride supérieure (27) possédant une lèvre (28) dirigée vers le bas qui peut coopérer avec des évidements (29) dans les extrémités supérieures (24) des profilés de support (1), et des évidements (30) étant placés à des distances bien définies dans cette lèvre (28).

22.- Construction de toiture suivant l'une des revendications précédentes, caractérisée en ce que les profilés de support (1) consistent en petits-bois.

23.- Elément d'accouplement tel qu'appliqué dans la construction de toiture suivant l'une des revendications 1 à 22, caractérisé en ce que cet élément d'accouplement (8) consiste principalement en un profilé en aluminium en forme de U, formé par un bourrelet inférieur (15), un bourrelet latéral (16) et un bourrelet supérieur (17) ; des moyens de fixation (9) pour installer le profilé sur le bord (4) d'une gouttière (2), consistant, d'une part, d'une lèvre (10) en forme de crochet placée sur la face inférieure du bourrelet inférieur (15) et, d'autre part, d'une saillie (11) également placée sur la face inférieure du bourrelet inférieur (15) ; et d'une lèvre (19) dirigée vers l'intérieur de la forme en U pour le verrouillage des profilés de support (1).

24.- Elément d'accouplement suivant la revendication 23, caractérisé en que la saillie (11) placée sur la surface inférieure du bourrelet inférieur (15) consiste en une lèvre en oblique ; que la lèvre en forme de crochet (10) est dirigée vers la lèvre inclinée (11) ; et que cette lèvre en forme de crochet (10) est située à une distance plus éloignée du bourrelet latéral (16) que ladite lèvre inclinée (11).

25.- Elément d'accouplement dans la forme d'un faîte, particulièrement pour des serres, caractérisé en ce que ce faîte (3) consiste principalement en un profilé qui présente des moyens des deux côtés qui forment une assiette pour les extrémités supérieures (24) des profilés de support (1) d'une construction de toiture.

26.- Elément d'accouplement suivant la revendication 25, caractérisé en ce que le profilé susdit consiste principalement en une âme (25) et, des deux côtés de cette âme (25) en deux bourrelets dirigés vers le bas en oblique (26, 27), un de ces bourrelets 26, 27), au moins, présentant une lèvre (28) dirigée vers l'intérieur.

27.- Elément d'accouplement suivant la revendication 21, caractérisé en ce que des évidements (30) sont placés à des distances bien définies dans ladite lèvre (28).

28.- Elément d'accouplement suivant l'une des revendications 25 à 27, caractérisé en ce que le profilé est muni d'une assiette (33) sur le côté inférieur pour l'installation d'un élément de fixation anti-tempête, cette assiette (33) étant formée par des bords (34) dirigés l'un vers l'autre.

*Fig.1*

*Fig.2*

EP 0 345 238 A1

*Fig.3*

*Fig.4*

# Fig.5

# Fig.6

EP 0 345 238 A1

Fig.7

Fig.8

Fig.9

*Fig.10*

*Fig.11*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | NL-A-6 400 769 (TANKE)<br>* Figures 2-4; page 4, ligne 18 - page 5, ligne 30; page 6, ligne 32 - page 7, ligne 34 * | 1,2,19 | A 01 G    9/14<br>E 04 D    3/06 |
| Y | | 3,5-8,<br>10,16,<br>17,20-<br>22,27 | |
| | --- | | |
| Y | BE-A- 891 755 (DEFORCHE)<br>* Figure 1; page 3 * | 3,5-8,<br>10,16,<br>17 | |
| A | | 23 | |
| | --- | | |
| Y | BE-A- 869 810 (INTERNATIONAL EXTRUSION)<br>* Figure 1; page 3, lignes 9-14 * | 20-22,<br>27 | |
| X | | 25,26,<br>28 | |
| | --- | | |
| A | BE-A- 899 489 (F. CROLLET)<br>* Figures 1-3; pages 3-4 * | 1,23,25 | DOMAINES TECHNIQUES RECHERCHES (Int. Cl.4) |
| | --- | | |
| A | NL-A-8 204 257 (KOMBI-KASSEN)<br>* Figure 1; page 4, lignes 27-33 * | 1,23,25 | A 01 G<br>E 04 D |
| | ----- | | |

Le présent rapport a été établi pour toutes les revendications

| Lieu de la recherche | Date d'achèvement de la recherche | Examinateur |
|---|---|---|
| LA HAYE | 01-09-1989 | VERMEESCH,P.J.C.C. |